Europäisches Patentamt

European Patent Office

Office européen des brevets

(19)

(11) **EP 1 381 217 A1**

(12) **EUROPEAN PATENT APPLICATION**

(43) Date of publication:
**14.01.2004 Bulletin 2004/03**

(51) Int Cl.$^7$: **H04N 1/32**, G06T 1/00

(21) Application number: **03021964.6**

(22) Date of filing: **15.01.1998**

(84) Designated Contracting States:
**DE FR GB NL**

(30) Priority: **17.01.1997 JP 594197**
**17.02.1997 JP 3154597**

(62) Document number(s) of the earlier application(s) in accordance with Art. 76 EPC:
**98100636.4 / 0 854 633**

(71) Applicant: **NEC CORPORATION**
**Tokyo (JP)**

(72) Inventors:
• **Ishino, Toshiyuki**
  **Tokyo (JP)**
• **Sato, Shinobu**
  **Tokyo (JP)**

(74) Representative: **Pätzold, Herbert, Dr.-Ing.**
**Steubstrasse 10**
**82166 Gräfelfing (DE)**

Remarks:
This application was filed on 30 - 09 - 2003 as a divisional application to the application mentioned under INID code 62.

(54) **Image data illegal use prevention system**

(57) An image data illegal use prevention system includes an image data fetching unit (6) for fetching digital image data in which electronic watermark data may be embedded, and an electronic watermark data detection unit (8) for detecting electronic watermark data from the image data fetched by the image data fetching unit (6). If electronic watermark data are detected by the electronic watermark data detection unit (8), then an image data recording unit (7) does not record the image data fetched by the image data fetching unit (6) onto a recording medium (9), thereby preventing illegal duplication. The electronic watermark data are calculated, for example, in accordance with an expression determined in advance for frequency components of discrete cosine transformed digital image data.

EP 1 381 217 A1

## Description

This invention relates to digital image processing, and more particularly to a system for preventing illegal use of digital image data.

2. Description of the Preferred Embodiment

In recent years, illegal duplication of a digital image has become a problem.

In order to prevent illegal duplication, a system has been proposed wherein digital image data are ciphered such that only a reproduction system having a legal decipherment key can reproduce the ciphered digital image data. However, once the cipher is deciphered, later duplication cannot be prevented.

Thus, a system wherein a unique identification code is recorded on a recording medium to indicate permission or inhibition of duplication (refer to Japanese Patent Laid-Open Application No. Heisei 8-69419), another system wherein decoders for subscription television broadcasting have different identification codes from one another recorded therein such that only those decoders which have contracted identification codes can effect correct decoding (refer to Japanese Patent Laid-Open Application No. Heisei 5-260468) and so forth have been proposed.

Further, in order to prevent illegal use and duplication of a digital image, also a method has been proposed wherein special information, that is, electronic watermark data, is embedded into the digital image itself. As such electronic watermark data for a digital image as described above, two kinds of electronic watermark data of visible electronic watermark data and invisible electronic watermark data are available.

The visible electronic watermark data are used such that a special character or symbol or the like is combined with an image so that it may be visually recognized. While the visible electronic watermark data deteriorate the picture quality, they have an effect of visually appealing to a user of a digital image for prevention of illegal use of the digital image.

An example of embedding of visible electronic watermark data is disclosed in Japanese Patent Laid-Open Application No. Heisei 8-241403. According to the method disclosed in the document just mentioned, when visible electronic watermark data are combined with an original image, only the brightness components of those pixels which correspond to opaque ones of the electronic watermark data are varied while color components of the pixels are not varied. In this instance, the scaling factor by which the brightness components of pixels are varied is determined based on color components, random numbers, values of pixels of the electronic watermark data and so forth.

on the other hand, the invisible electronic watermark data are electronic watermark data embedded in an image so that the picture quality may not be deteriorated. Since the invisible electronic watermark data little deteriorate the picture quality, they are characterized in that they cannot be recognized visually.

However, if special information which allows identification of an author is embedded as the electronic watermark data, then even after illegal duplication is performed, the author can be specified by detecting the electronic watermark data. On the other hand, if duplication inhibition information is embedded, then, for example, when a reproduction apparatus detects the duplication inhibition information, it is possible to notify the user that duplication of the data is inhibited or to render a duplication prevention mechanism in the reproduction apparatus operative to limit duplication of the data by a video tape recorder (VTR) or the like,

One of available methods of embedding invisible electronic watermark data into a digital image is to embed special information as electronic watermark data into a portion of pixel data such as the LSB (least significant bit) which has a comparatively little influence on the picture quality. In other words, this method can be regarded as a method which inserts electronic watermark data into a waveform with respect to time of an image signal. However, where this method is applied, electronic watermark data can be removed readily from an image. For example, if a low-pass filter is used, then information of the LSB of a pixel is lost. Further, electronic watermark data are lost also by image compression processing since the image compression processing reduces the data amount by removing information at such a portion which has a comparatively little influence on the picture quality as mentioned above. Consequently, the method described above is disadvantageous in that it is difficult to redetect the electronic watermark data.

Thus, another method has been proposed wherein an image is frequency converted and electronic watermark data are embedded into a resulting frequency spectrum *(Nikkei* Electronics, April 22, 1996, No. 660, p. 13). In this method, since electronic watermark data are embedded into frequency components, the electronic watermark data are not lost even by image processing such as compression processing or filtering. Further, random numbers which exhibit a normal distribution are adopted as the electronic watermark data in order to prevent interference between electronic watermark data and make it difficult to destroy electronic watermark data without having a significant influence on the entire image.

In a method of embedding electronic watermark data, an original image D is divided into blocks of 8 pixels x 8 pixels, and electronic watermark data are embedded regarding each block as a processing unit. Also extraction processing of the electronic watermark data is performed in units of a block.

In electronic watermark data embedding processing, data are first set successively as f(1), f(2), ..., f(n) in the ascending order of the frequency component of an AC component in a frequency region after discrete cosine transform (DCT) in MPEG (Moving Picture Experts Group) coding processing is completed, and electronic watermark data w(1), w(2), ..., 2(n) are selected from within a normal distribution whose average is 0 and whose dispersion is 1, and then

$$F(i) = f(i) + \alpha * avg(f(i)) * w(i)$$

is calculated for the individual values of i, where $\alpha$ is a scaling factor, and avg(f(i)) is a partial average which is an average of absolute values of three neighboring points to the point f(i). Then, succeeding processing of MPEG coding processing is performed replacing f(i) with F(i).

Detection of electronic watermark data is performed in accordance with a method described below. In the detection method, an original image is not required, but only it is required that electronic watermark data candidates w(i) (where i = 1, 2, ... , n) be known.

In a frequency region of each block after dequantization of MPEG decompression processing is completed, data are represented as F(1), F(2), ..., F(n) in the ascending order of the frequency component. Average values of absolute values of three neighboring points to each point F(i) are represented as partial averages avg(F(i)), and electronic watermark data W(i) are calculated in accordance with

$$W(i) = F(i)/avg(F(i)).$$

Further, sum totals WF(i) of W(i) for one image are calculated for the individual 1.

Thereafter, making use of an inner product of vectors, a statistical similarity between the electronic watermark data w(i) and the sum totals WF(i) is calculated in accordance with

$$C = WF * w/(WFD * WD)$$

where W = (WF(1), WF(2), ..., WF(n)), w = (w(1), w(2), ..., w(n)), WFD = absolute value of the vector WF, and wD = absolute value of the vector w. When the statistical similarity C has a value higher than a particular value, it is discriminated that the electronic watermark data are embedded.

However, where the method described above is employed, if image data are regarded as a mere single block of digital data on a personal computer, they can be duplicated by a desired number of times using a copy command of operation system software of the Windows, MS-DOS (both trade marks of Microsoft) or the like.

Further, with a system which handles a digital image such as a digital video recorder, a copying machine or a facsimile, since a copy of data can be produced simply, it itself cannot be prevented that digital image data including electronic watermark data are duplicated as they are.

It is an object of the present invention to provide an image data illegal use prevention system which can prevent illegal use of digital image data without deterioration of the picture quality and allows, even if digital image data are duplicated identification of the ownership from the duplicate.

In order to attain the object described above, according to an aspect of the present invention, there is provided an image data illegal use prevention system, comprising image data fetching means for fetching digital image data in which electronic watermark data may be embedded, electronic watermark data detection means for detecting electronic watermark data from the image data fetched by the image data fetching means, and transfer inhibition means for inhibiting, if electronic watermark data are detected by the electronic watermark data detection means, transfer of the image data fetched by the image data fetching means to a transfer destination.

According to another aspect of the present invention, there is provided an image data illegal use prevention system, comprising image data fetching means for fetching digital image data in which electronic watermark data may be embedded, electronic watermark data detection means for detecting electronic watermark data from the image data fetched by the image data fetching means, and transfer means for transferring, if electronic water mark data are detected by the electronic watermark data detection means, data different from the image data fetched by the image data fetching means to a transfer destination. Preferably, the different data are data obtained by superposing data obtained by multiplying the electronic watermark data by a constant on the image data fetched by the image data fetching means.

According to a further aspect of the present invention, there is provided an image data illegal use prevention system, comprising image data fetching means for fetching digital image data in which electronic watermark data may be embedded, electronic watermark data detection means for detecting the electronic watermark data from the image data fetched by the image data fetching means, and transfer inhibition means for discriminating whether the detected electronic watermark data indicate transfer permission or inhibition and inhibiting, when the detected electronic water mark data indicate transfer inhibition, a transferring operation of the fetched image data to a transfer destination. Preferably, the transfer inhibition means discriminates, when the detected electronic watermark data include a value representing that the transfer permission time number is zero, that the detected electronic watermark data are electronic watermark data indicating transfer inhibition.

According to a still further aspect of the present invention, there is provided an image data illegal use inhibition system, comprising image data fetching means for fetching digital image data in which electronic watermark data including a value indicating that the transfer permission time number is m may be embedded, watermark data embedding means for embedding, into the fetched image data, new electronic watermark data which includes a value indicating that the transfer permission time number is smaller by one than the preceding value of m, and transfer means for transferring the image data in which the new electronic watermark data are embedded to a transfer destination.

In the image data illegal use inhibition systems, the electronic watermark data may be calculated in accordance with a predetermined expression using frequency components of the digital image data obtained by discrete cosine transform. Otherwise, any of the image data illegal use inhibition system may be constructed such that the image data fetching means fetches digital image data from a recording medium on which the digital image data are recorded, and the transfer destination is a recording medium different from the recording medium on which the digital image data are recorded.

It is to be noted that, in the present Specification, the word "transfer" includes transmission of digital image data from a source by or in which the digital image data are produced or stored to another element, storage of such digital image data into or onto another medium, duplication of digital image data from a recording medium in which the digital image data are recorded to another recording medium, duplication of a file by a computer and so forth and should be interpreted widely as any operation which makes digital image data in such a form as allows use of the digital image data.

With the image data illegal use prevention systems described above, duplication of image data can be prevented without deterioration of the picture quality using an electronic watermark technique. Consequently, the image data illegal use prevention systems can be applied to various image processing systems.

Further, illegal copying can be prevented without any limitation to a medium of copying source data and to a medium of a copying destination, and even if data are copied illegally, if copyright data are embedded as watermark data in the data, then a person who has the ownership of the image data can be Identified by investigating the watermark data and a person who has performed illegal duplication can be specified.

The above and other objects, features and advantages of the present invention will become apparent from the following description and the appended claims. taken in conjunction with the accompanying drawings in which like parts or elements are denoted by like reference characters.

FIG. 1 is a block diagram showing a basic construction of an image data illegal use prevention system according to the present invention;

FIG. 2 is a block diagram showing an exemplary construction of a watermark data embedding unit shown in FIG. 1;

FIG. 3 is a block diagram showing an exemplary construction of a watermark data detection unit shown in FIG. 1;

FIG. 4 is a block diagram of a digital video system to which the image data illegal use prevention system of FIG. 1 is applied;

FIG. 5 is a block diagram of a digital copying system to which the image data illegal use prevention system of FIG. 1 is applied;

FIG. 6 is a block diagram of a form of an image production and recording apparatus shown in FIG. 1 where it is formed as a printer system;

FIG. 7 is a block diagram of a form of an image duplication apparatus shown in FIG. 1 where it is formed as a facsimile system:

FIG. 8 is a block diagram of another form of the image duplication apparatus shown in FIG. 1 where it is formed as a capture board system;

FIG. 9 is a block diagram of a data transfer system to which an image data illegal use prevention system according to the present invention is applied;

FIG. 10 is a flow chart illustrating operation of the data transfer system of FIG. 9; and

FIG. 11 is a block diagram showing an exemplary construction of a watermark data detection/embedding unit shown in FIG. 9.

FIG, 1 shows a basic construction of an image data illegal use prevention system to which the present invention is applied. The image data illegal use prevention system includes two principal components of an image production and recording apparatus 100 and an image duplication apparatus 101. The image production and recording apparatus 100 is composed of an image data production unit 1, a watermark data embedding unit 2, a watermark data table 3 and an image recording unit 4. Meanwhile, the image duplication apparatus 101 is composed of an image data fetching unit 5, an image data recording unit 7 and a watermark data detection unit 8.

In the image production and recording apparatus 100, digital image data produced by the image data production unit 1 are sent to the watermark data embedding unit 2. The watermark data embedding unit 2 inserts electronic watermark data of the watermark data table 3 into the digital image data in such a manner as hereinafter described. The image data recording unit 4 records the digital image data, in which the electronic watermark data are embedded, onto a recording medium 5.

In the image duplication apparatus 101, the image data fetching unit 6 fetches the digital image data recorded on the recording medium 5, The watermark data detection unit 8 detects the electronic watermark data in the digital image data fetched by the image data fetching unit 6 in such a manner as hereinafter described. The image data recording unit 7 records, if the image data fetching unit 6 does not detect electronic watermark data, the digital image data onto another recording medium 9 to produce a duplicate, but does not perform, if electronic watermark data are detected, recording of the digital image data onto the recording medium 9.

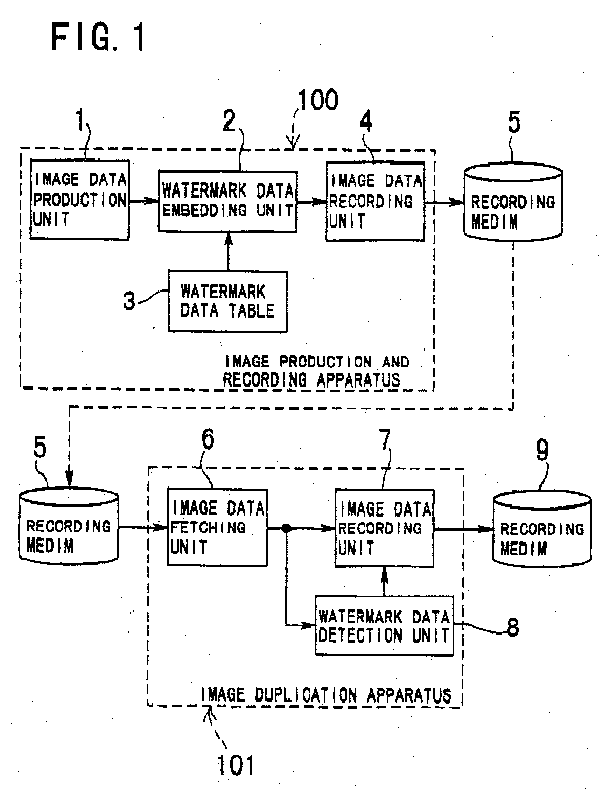

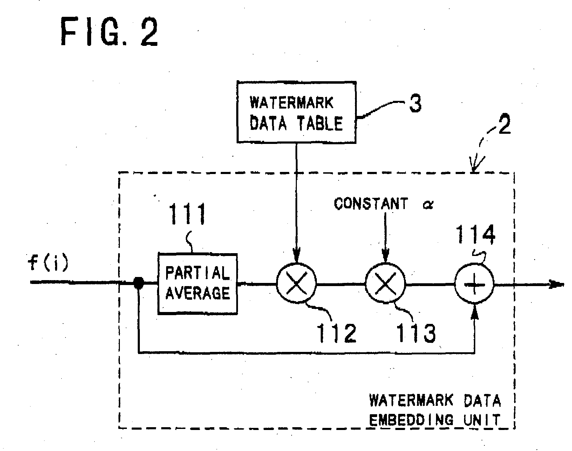

FIG. 2 shows an exemplary construction of the watermark data embedding unit 2. Digital image data from the image data production unit 1 of FIG. 1, that is, discrete cosine transformed MPEG image data, are inputted to a partial average calculation section 111 and an adder 114. The digital image data are represented as f(i) (i = 1, 2, ..., n) for the convenience of description.

The partial average calculation section 111 calculates partial averages described hereinabove in accordance with arg(f(i)) = (|f(i-1)| + |f(i)| + |f(i+1)|)/3 and supplies a result of the calculation to one of input terminals of a multiplier 112.

To the other input terminal of the multiplier 112, electronic watermark data w(i) are supplied from the watermark data table 3. An output of the multiplier 112 is multiplied by a scaling factor $\alpha$ by a multiplier 113, and a result of the multiplication is added to the digital image data by the adder 114. A result of the addition, that is, image data (f(i) + $\alpha$ * arg(f(i)) * w(i)) in which the electronic watermark data are embedded, are obtained from the adder 114 and supplied to the image data recording unit 4 of FIG. 1.

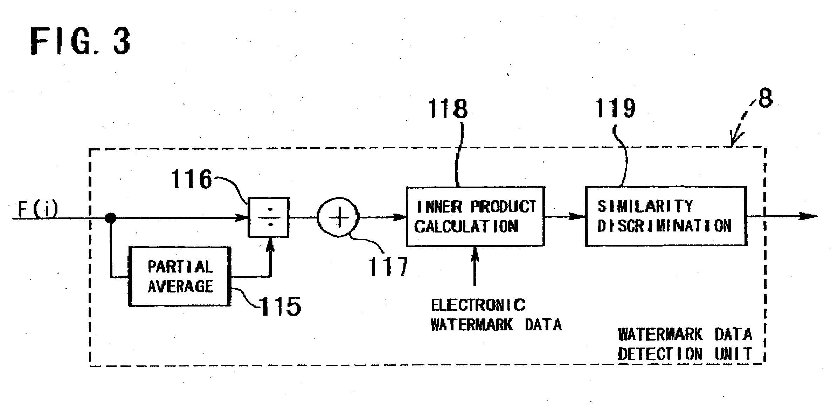

FIG. 3 shows an example of a construction of the watermark data detection unit 8. Data F(i) fetched by the image data fetching unit 6 of FIG. 1 are supplied to a partial average calculation section. 115 and a divider 116. The partial average calculation section 115 calculates partial averages avg(F(i)) mentioned hereinabove. This calculation is performed, for example, in accordance with avg(F(i)) = (|F(i-1)| + |F(i)| + |F(i+1)|)/3. The divider 116 performs calculation of W(i) = F(i)/avg(F(i)).

Then, an adder 117 calculates, for the individual values of i, sum totals WF(i) of the thus calculated values W(i) for one image. Then, the sum totals WF(i) are supplied to an inner product calculation section 118, by which inner products thereof with electronic watermark data w(i) of an object of detection are calculated. The calculation of the inner product calculation section 118 is represented in the following manner.

$$C = WF * w/(WFD * wD)$$

where WF is a vector whose elements are wF(1), WF(2). ..., WF(n), w is a vector whose elements are w(1), w(2), ..., w(n), WFD is an absolute value of the vector WF, and wD is an absolute value of the vector w.

The inner product calculation section 118 calculates inner products C for all of possible ones of electronic watermark data and supplies the inner products C to a similarity discrimination section 119.

The similarity discrimination section 119 detects those electronic watermark data which maximize the inner products C, and sends out a result of the detection to the image data recording unit 7 of FIG. 1.

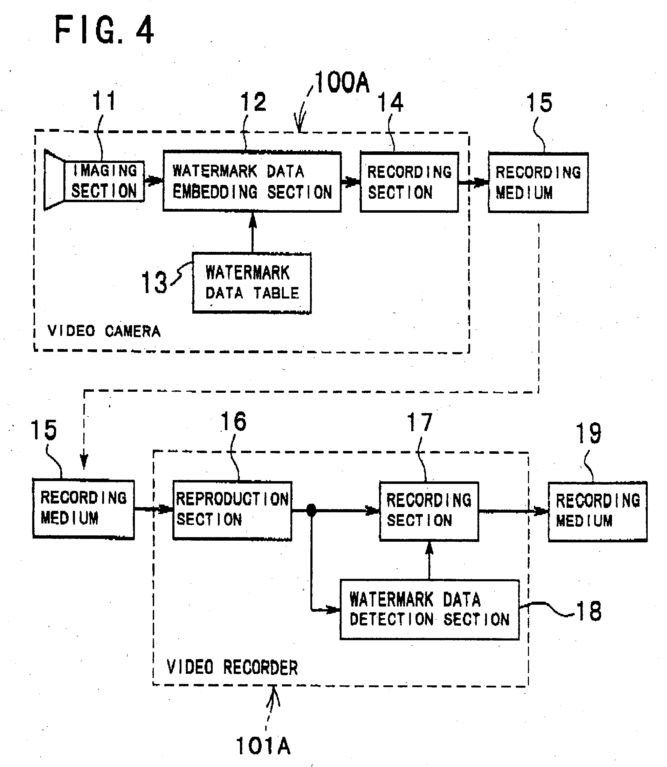

FIG. 4 shows a digital video system to which the image data illegal use prevention system of FIG. 1 is applied. Referring to FIG. 4, in the digital video system shown, the image production and recording apparatus 100 shown in FIG. 1 is formed as a video camera 100A and the image duplication apparatus 101 is formed as a video recorder 101A.

In the video camera 100A, an image imaged by an imaging section 11 is sent as digital image data to a watermark data embedding section 12. Meanwhile, electronic watermark data to be embedded into digital image data are stored in a watermark data table 13. Thus, the electronic watermark data are read out from the watermark data table 13 and sent to the electronic watermark data embedding section 12. The watermark data embedding section 12 inserts the electronic watermark data into the digital image data sent thereto in such a manner as described above. The digital image data in which the electronic watermark data are inserted are stored onto a recording medium 15 such as a magnetic tape or an optical disk by a recording section 14.

When a duplicate is to be produced, the digital image data stored on the recording medium 15 are reproduced by a reproduction section 16 of the video recorder 101A. Normally, the digital image data are stored onto a recording medium 19 again by a recording section 17 to produce a duplicate. However, if electronic watermark data are inserted in the digital image data reproduced by the reproduction section 16, that is, if electronic watermark data are detected by a watermark data detection section 18, then such detection is reported to the recording section 17. When the detection of electronic watermark data is reported, the recording section 17 does not perform storage of the digital image data onto the recording medium 19, thereby preventing illegal duplication.

Alternatively, when electronic watermark data are detected, dummy data may be supplied to the recording section 17 or data obtained by multiplying the watermark data stored in the watermark data detection section 18 by a constant so that the data may have a maximum magnitude substantially equivalent to the dynamic range of the image data may be added to reproduced image data and sent to the recording section 17. If such data are supplied to the recording section 17, then an image quite different from the original image is outputted from the recording section 17, and consequently, illegal duplication can be prevented even if a duplication operation is not inhibited.

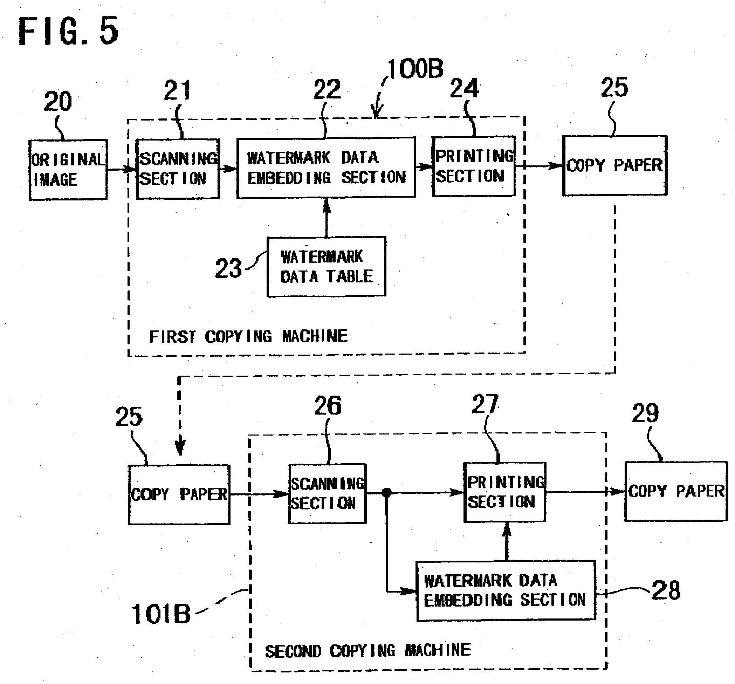

FIG. 5 shows a digital copying system to which the image data illegal use prevention system shown in FIG. 1 is applied. Referring to FIG. 5, in the digital copying system shown, the image production and recording apparatus 100 shown in FIG. 1 is formed as a first copying machine 100B and the image duplication apparatus 101 is formed as a second copying machine 101B.

An original image 20 fetched by a scanning section 21 of the first copying machine 1003 is sent as digital image data to a watermark data embedding section 22. Meanwhile, electronic watermark data to be embedded into digital image data are stored in a watermark data table 23, and they are read out from the watermark data table 23 and sent to the watermark data embedding section 22. The watermark data embedding section 22 inserts the electronic watermark data into the digital image data sent thereto. The digital image data in which the electronic watermark data are inserted are printed on copy paper 25 by a printing section 24.

In the second copying machine 101B, the image printed on the copy paper 25 is fetched and converted back into digital image data by a scanning section 26. Normally, the digital image data are printed on copy paper 28 again by a printing section 27 to produce a duplicate. However, if electronic watermark data are inserted in the digital image data fetched by the scanning section 26, that is, if electronic watermark data are detected by a watermark data detection section 28, then such detection is reported to the printing section 27. The printing section 27 does not perform, when the detection of electronic watermark data is reported, printing of the digital image data onto the copy paper 29, thereby preventing illegal copying.

Alternatively, when the electronic watermark data are detected, dummy data may be supplied to the printing section 27 or data obtained by multiplying the watermark data stored in the watermark data detection section 28 by a constant so that they may have a maximum magnitude substantially equal to the dynamic range of the image data may be added to (superposed on) the reproduced image data and sent to the printing section 27. If such data are supplied to the printing section, then an image quite different from the original image is outputted from the printing section 27. Consequently, illegal copying can be prevented even if a copying operation is not inhibited.

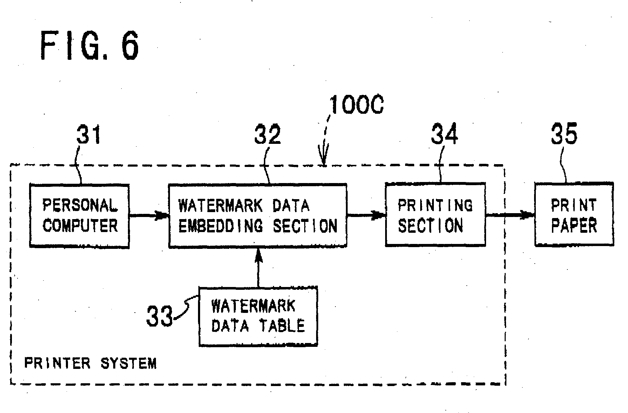

FIG. 6 shows a printer system which makes use of a personal computer. Referring to FIG. 6, the printer system 100C shown operates as the image production and recording apparatus 100 described hereinabove with reference to FIG. 1. In the printer system 100C, electronic watermark data to be embedded into digital image data are stored in a watermark data table 33. A watermark data embedding section 32 inserts the electronic watermark data from the watermark data table 33 into digital image data sent thereto from a personal computer 31 and sends resulting data to a printing section 34. The printing section 34 prints the digital image data, in which the electronic watermark data are inserted, on print paper 35. Consequently, even if it is tried to duplicate the digital image data using, for example, the copying machine 101B of FIG. 5, since the electronic watermark data are detected by the watermark data detection section 28, illegal copying can be prevented.

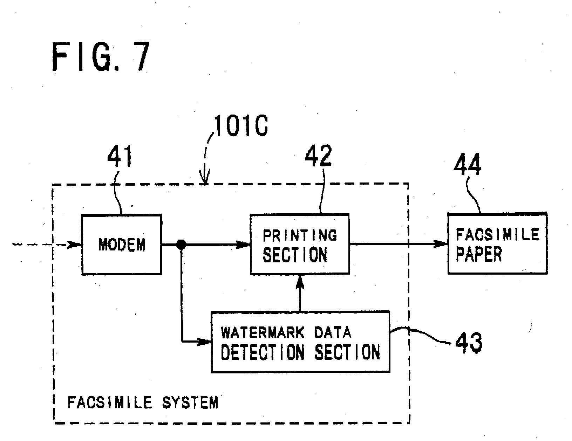

FIG. 7 shows a facsimile system. Referring to FIG. 7, the facsimile system 101C shown operates as the the image duplication apparatus 101 described hereinabove with reference to FIG. 1. In the facsimile system 101C, when image data transmitted through a telephone line are received by a modem 41, the image data are normally sent to a printing section 42, by which they are printed on facsimile paper 44. Where the received image data are digital image representing an image in which electronic watermark data are inserted like an image printed, for example, by the printer system 100C of FIG. 6, it is checked by a watermark data detection section 43 whether or not electronic watermark data are inserted in the digital image data. If electronic watermark data are detected. then such detection is reported to the printing section 42. When the detection of electronic watermark data is reported, the printing section 42 does not perform a printing operation, thereby preventing illegal duplication.

Alternatively, if electronic watermark data are detected, then dummy data may be supplied to the printing section 42 or data obtained by multiplying the watermark data stored in the watermark data detection section 43 by a constant so that they may have a maximum magnitude substantially equal to the dynamic range of the image data may be added to (superposed on) the restored image data and sent to the printing section 42. If such data are received by the printing section 42, then an image quite different from the original image is outputted from the printing section 42. Consequently, illegal printing can be prevented even if a printing operation is not inhibited,

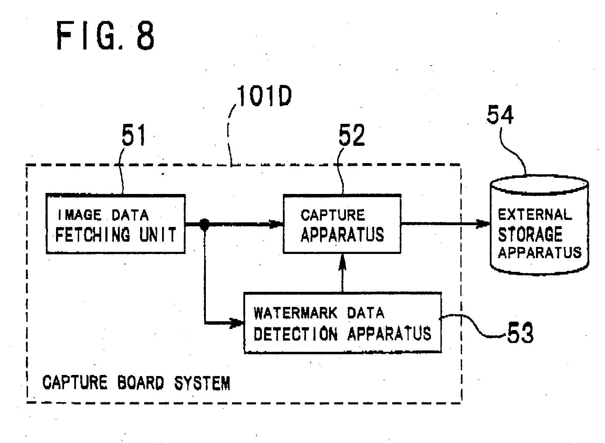

FIG. 8 shows a capture board system. Referring to FIG. 8, the capture board system 101D shown operates as the the image duplication apparatus 101 described hereinabove with reference to FIG. 1. In the capture board system 101D, image data fetched by image data fetching unit 51 are normally sent to a capture apparatus 52, by which they are stored into an external storage apparatus 54. If the image data are digital image data in which electronic watermark data are inserted like an image stored, for example, by the video camera 100A of FIG. 4, then it is checked by an electronic watermark data detection apparatus 53 whether or not electronic watermark data are inserted in the digital image data. If electronic watermark data are detected, then such detection is reported to the capture apparatus 52. The capture apparatus 52 does not perform, when such detection of electronic watermark data is reported, a storing operation of data, thereby preventing illegal duplication.

Alternatively, if electronic watermark data are detected, then dummy data may be supplied to the capture apparatus 52 or data obtained by multiplying the watermark data stored in the watermark data detection apparatus 53 by a constant so that they may have a maximum magnitude substantially equal to the dynamic range of the image data may be added to (superposed on) the restored image data and sent to the capture apparatus 52. If such data are received by the capture apparatus, then an image quite different from the original image is outputted from the capture apparatus 52, Consequently, illegal storage can be prevented even if a storing operation is not inhibited.

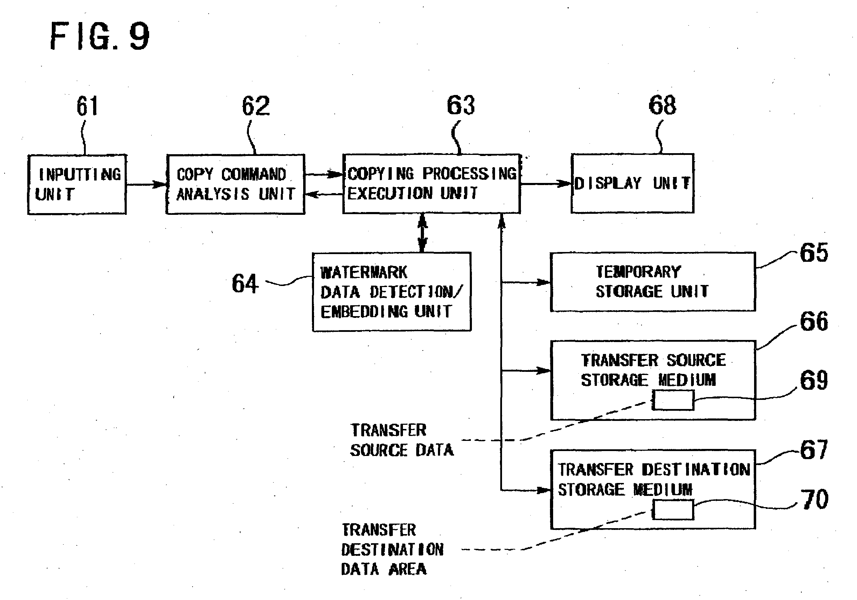

FIG. 9 shows a data transfer system to which an image data illegal use prevention system according to the present invention is applied. In the data transfer system, data are transferred from a storage unit of a transfer source to a storage unit of a transfer destination so that they may be copied. Referring to FIG. 9, an inputting unit 61 checks whether or not there is a command inputted thereto. If an inputted command is present, then it is analyzed by a copy command analysis unit 62 what the inputted command is. If it is discriminated, as a result of the analysis, that the inputted command is a command to copy transfer source data 69 of a storage medium 66 of a transfer source to a transfer destination data area 70 of a storage medium 67 of a transfer designation, then a command is sent to a copying processing execution unit 63 so that copying processing may be executed. The copying processing execution unit 63 transfers the transfer source data 89 stored in the storage medium 66 of the transfer destination to temporary storage unit 65 and then causes the thus transferred data 69 to be checked by a watermark data detection/embedding unit 64. The watermark data detection/embedding unit 64 detects presence or absence of watermark data in the data 69 and discriminates, if watermark data are detected, which one of permission and inhibition of copying the watermark data indicate.

If a result of detection of watermark data indicates permission of copying, then the transfer source data 69 stored in the temporary storage unit 65 are copied into the transfer destination data area 70 of the storage medium 67. However, if the detected watermark data indicates permission of copying by m times, than dequantized data in which new watermark data are embedded are sent from the watermark data detection/embedding unit 64 to the copying processing execution unit 63 and stored into the transfer destination data area 70 of the storage medium 67 of the transfer destination, and copying is executed. Then, information representing what coping has been performed by the copying processing execution unit 63 is sent to and displayed by display unit 68, thereby ending the copying processing. If the detected watermark data indicate inhibition of copying, then no copying is performed.

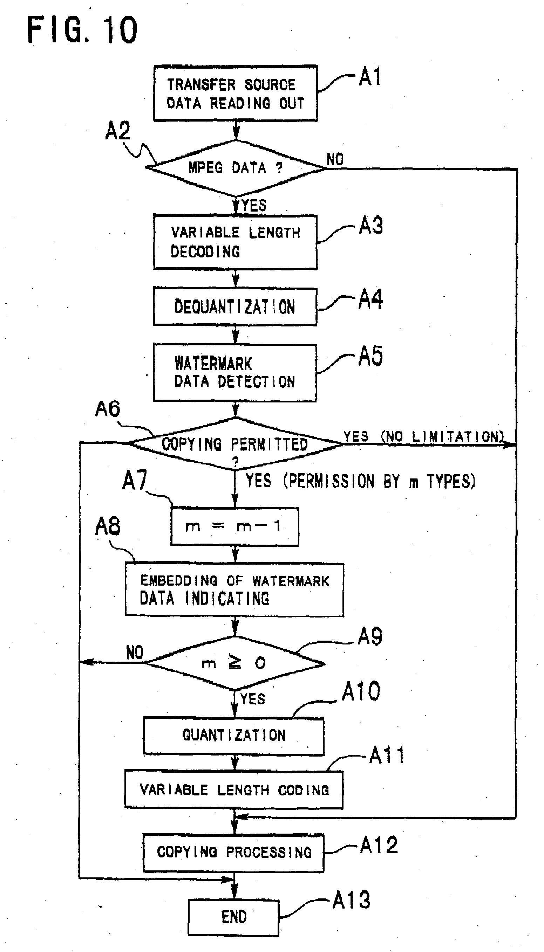

Subsequently, operation of copying processing by the data transfer system of FIG. 9 is described with reference to a flow chart of FIG. 10.

The copying processing execution unit 63 reads out the transfer source data 69 from the storage medium 66 of the transfer source in step A1. In step A2, the transfer source data 69 are inputted to the copy command analysis unit 62, by which a header of MPEG data is analyzed to discriminate whether or not the data are MPEG image data.

If the transfer source data 69 are MPEG image data, then variable length decoding processing for dequantized data is performed in step A3, and the variable length coded data are dequantized in step A4. The dequantized data are supplied to the watermark data detection/embedding unit 64, by which watermark data are detected. In step A6, discrimination of the detected watermark data is performed.

If the watermark data detected in step A5 indicate inhibition of copying, then the control jumps without doing anything to step A13, in which the processing is ended.

If the watermark data detected in step A5 indicate that there is no limitation to the number of times in copying, the control jumps to step A12, in which the transfer source data 69 are copied into the transfer destination data area 70, whereafter the control jumps to step A13, in which the processing is ended.

If the watermark data detected in step A5 indicate permission of copying by m (m = 1 to k) times, m is updated to m = m-1 in step A7. Then, in step A8, watermark data indicating permission of copying by m times are embedded into the data dequantized in step A4.

Then, if $m \geq 0$ in step A9, then the data into which the watermark data indicating permission of copying by m times have been embedded in step A8 are quantized in step A10. The quantized data are variable length coded in step A11, The data variable length coded and converted into MPEG image data are inputted in step A12 to the copying processing execution unit 63, by which copying processing of them is performed.

If m < 0 in step A9, then since this signifies that copying is inhibited, the processing is ended.

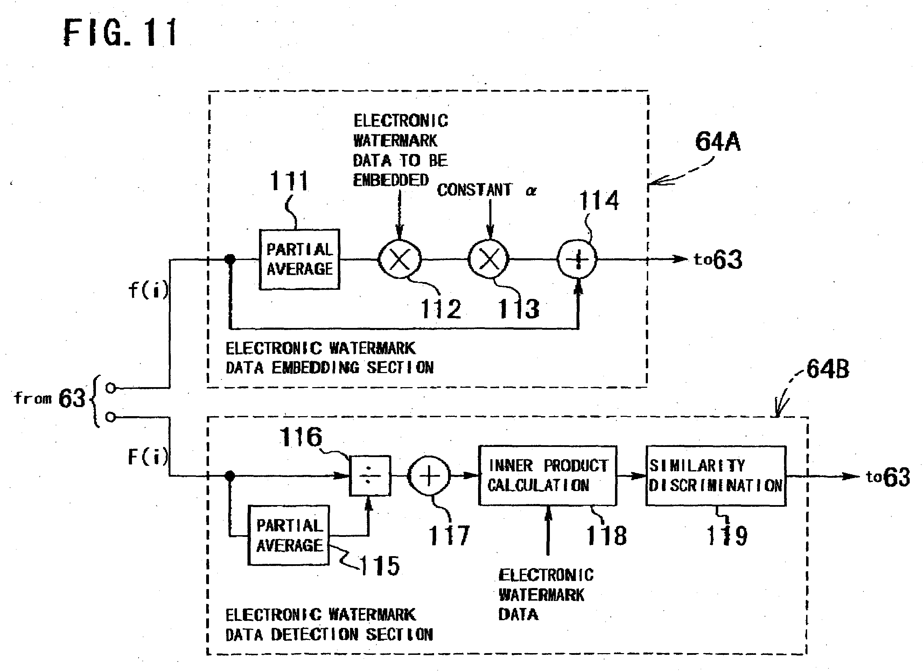

Subsequently, an exemplary construction of the watermark data detection/embedding unit 64 is described with reference to FIG. 11. The watermark data detection/embedding unit 64 is formed from an electronic watermark data embedding section 64A and an electronic watermark data detection section 64B.

The electronic watermark data detection section 64B has a construction same as that of the watermark data detection unit 8 shown in FIG. 3, and the MPEG data F(i) decoded in step A3 of FIG. 10 are supplied to the partial average calculation section 111 and the multiplier 112. The partial average calculation section 111 calculates partial averages avg(F(i)) mentioned hereinabove. The divider 116 performs calculation of

$$W(i) = F(i)/avg(F(i)).$$

Then, the adder 117 calculates, for the individual i, sum totals WF(i) of the calculated values W(i) for one image. Then, the sum totals WF(i) are supplied to the inner product calculation section 118, by which inner product calculation, with the watermark data w(i) is performed.

The inner product calculation section 118 calculates inner products C for all of possible watermark data and supplies the thus calculated inner products C to the similarity discrimination section 119.

The similarity discrimination section 119 detects that watermark data with which the inner product C exhibits a maximum value, and sends out a result of the detection to the copying processing execution unit 63 of FIG. 9.

The electronic watermark data embedding section. 64A has a construction same as that of the watermark data embedding unit 2 shown in FIG. 2, and the transfer source data from which the original watermark data have been removed in step A5 of FIG. 10 are inputted to the partial average calculation section 111 and the adder 114.

The partial average calculation section 111 calculates a partial average described hereinabove and supplies a result of the calculation to one of input terminals of the multiplier 112.

To the other input terminal of the multiplier 112, the watermark data w(i) which indicate the value of m determined in step A7 of FIG. 10 are supplied. An output of the multiplier 112 is multiplied by a scaling factor $\alpha$ by the multiplier 113, and a result of the multiplication is added to the digital image data by the adder 114. A result of the addition, that is, image data (F(i) + $\alpha$ * arg(f(i)) * w(i)) in which the new watermark data are embedded, are obtained from the adder 114 and supplied to the copying processing execution unit 63 of FIG. 9.

Having now fully described the invention, it will be apparent to one of ordinary skill in the art that many changes and modifications can be made thereto without departing from the spirit and scope of the invention as set forth herein.

**Claims**

1. An image data illegal use inhibition system, **characterized in that** it comprises:

   image data fetching means (66) for fetching digital image data in which electronic watermark data may be embedded:

   electronic watermark data detection means (64) for detecting the electronic watermark data from the image data fetched by said image data fetching means (66); and
   transfer inhibition means (63) for discriminating whether the detected electronic watermark data indicate transfer permission or inhibition and inhibiting, when the detected electronic water mark data indicate transfer inhibition, a transferring operation of the fetched image data to a transfer destination (67), whereby said transfer inhibition means (63) discriminates, when the detected electronic watermark data include a value representing that the transfer permission time number is zero, that the detected electronic watermark data are electronic watermark data indicating transfer inhibition.

2. An image data Illegal use inhibition system, **characterized in that** it comprises:

   image data fetching means (66) for fetching digital image data in which electronic watermark data including a value indicating that the transfer permission time number is m may be embedded;
   watermark data embedding means (64) for embedding, into the fetched image data, new electronic watermark data which includes a value indicating that the transfer permission time number is smaller by one than the preceding value of m; and
   transfer means (63) for transferring the image data in which the new electronic watermark data are embedded to a transfer destination (67), and transfer means (63) for transferring the image data in which the new electronic watermark data are embedded to a transfer destination.

3. An image data illegal use inhibition system as set forth in any one of claims 1 to 2, **characterized in that** the electronic watermark data are calculated in accordance with a predetermined expression using frequency components of the digital image data obtained by discrete cosine transform.

4. An image data illegal use inhibition system as set forth in any one of claims 1 to 3, **characterized in that** said image data fetching means (6; 16; 26; 41; 51; 66) fetches digital image data from a recording medium (5; 15; 25; 35; 69) on which the digital image data are recorded, and the transfer destination is a recording medium (9; 19; 29; 44; 54; 70) different from the recording medium (5; 15; 25; 35; 69) on which the digital image data are recorded.

5. An image data illegal use inhibition system as set forth in any one of claims 1 to 4, **characterized in that**
   said image data illegal use inhibition system is applied to a digital video system and / or a digital copying system and / or a printer system and / or a facsimile system and / or a capture board system and / or a data transfer system.

EP 1 381 217 A1

# FIG. 1

10

# FIG. 2

WATERMARK DATA TABLE — 3

2

CONSTANT $\alpha$

111

114

f(i)

PARTIAL AVERAGE

$\times$

$\times$

$+$

112    113

WATERMARK DATA EMBEDDING UNIT

FIG. 3

F(i) → 116 (÷) → 117 (+) → 118 INNER PRODUCT CALCULATION → 119 SIMILARITY DISCRIMINATION →

115 PARTIAL AVERAGE

ELECTRONIC WATERMARK DATA

WATERMARK DATA DETECTION UNIT

8

# FIG. 4

VIDEO CAMERA

- 11 IMAGING SECTION
- 12 WATERMARK DATA EMBEDDING SECTION
- 13 WATERMARK DATA TABLE
- 14 RECORDING SECTION
- 15 RECORDING MEDIUM
- 100A

VIDEO RECORDER

- 15 RECORDING MEDIUM
- 16 REPRODUCTION SECTION
- 17 RECORDING SECTION
- 18 WATERMARK DATA DETECTION SECTION
- 19 RECORDING MEDIUM
- 101A

# FIG. 5

EP 1 381 217 A1

# FIG. 6

# FIG. 7

101C

41    42    44

| MODEM | | PRINTING SECTION | | FACSIMILE PAPER |

WATERMARK DATA DETECTION SECTION    43

FACSIMILE SYSTEM

# FIG. 8

101D

51

52

54

IMAGE DATA FETCHING UNIT

CAPTURE APPARATUS

EXTERNAL STORAGE APPARATUS

WATERMARK DATA DETECTION APPARATUS

53

CAPTURE BOARD SYSTEM

# FIG. 9

61 INPUTTING UNIT → 62 COPY COMMAND ANALYSIS UNIT → 63 COPYING PROCESSING EXECUTION UNIT → 68 DISPLAY UNIT

64 WATERMARK DATA DETECTION/ EMBEDDING UNIT

65 TEMPORARY STORAGE UNIT

66 TRANSFER SOURCE STORAGE MEDIUM — 69

TRANSFER SOURCE DATA

67 TRANSFER DESTINATION STORAGE MEDIUM — 70

TRANSFER DESTINATION DATA AREA

EP 1 381 217 A1

# FIG. 10

Flowchart:

- A1: TRANSFER SOURCE DATA READING OUT
- A2: MPEG DATA ? — NO →
  - YES ↓
- A3: VARIABLE LENGTH DECODING
- A4: DEQUANTIZATION
- A5: WATERMARK DATA DETECTION
- A6: COPYING PERMITTED ? — YES (NO LIMITATION) →
  - YES (PERMISSION BY m TYPES) ↓
- A7: $m = m - 1$
- A8: EMBEDDING OF WATERMARK DATA INDICATING
- A9: $m \geq 0$ — NO ←
  - YES ↓
- A10: QUANTIZATION
- A11: VARIABLE LENGTH CODING
- A12: COPYING PROCESSING
- A13: END

# FIG. 11

EP 1 381 217 A1

## EUROPEAN SEARCH REPORT

**European Patent Office**

Application Number

EP 03 02 1964

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | "INFORMATION HIDING IN TEXT IMAGES" RESEARCH DISCLOSURE,GB,INDUSTRIAL OPPORTUNITIES LTD. HAVANT, no. 389, page 539-540 XP000635465 ISSN: 0374-4353 * page 539, line 6 - line 9 * * page 540, line 3 - line 5 * * figure 1 * | 1-5 | H04N1/32 G06T1/00 |
| Y | US 5 293 422 A (LOIACONO RONALD) 8 March 1994 (1994-03-08) * abstract * * figure 1 * | 1-5 | |
| A | WO 96 36163 A (RHOADS GEOFFREY B ;DIGIMARC CORP (US)) 14 November 1996 (1996-11-14) * abstract * * claims 1-31 * | 1-5 | |
| A | EP 0 651 554 A (EASTMAN KODAK CO) 3 May 1995 (1995-05-03) * abstract * * column 1, line 13 - line 19 * * column 2, line 48 - line 52 * * column 3, line 18 - line 27 * * column 3, line 55 - line 58 * * column 4, line 25 - line 35 * * column 7, line 26 - line 30 * * claims 1-8 * | 1-5 | **TECHNICAL FIELDS SEARCHED (Int.Cl.7)** H04N G06T |
| A | BOLAND F M ET AL: "WATERMARKING DIGITAL IMAGES FOR COPYRIGHT PROTECTION" INTERNATIONAL CONFERENCE ON IMAGE PROCESSING AND ITS APPLICATIONS,GB,LONDON, page 326-330 XP000603824 * page 327, column 1, line 69 - line 73 * | 1-5 | |

-/--

The present search report has been drawn up for all claims

| Place of search | Date of completion of the search | Examiner |
|---|---|---|
| THE HAGUE | 24 November 2003 | Stoffers, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 03 02 1964

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | KOMATSU N ET AL: "A PROPOSAL ON DIGITAL WATERMARK IN DOCUMENT IMAGE COMMUNICATION AND ITS APPLICATION TO REALIZING A SIGNATURE" ELECTRONICS & COMMUNICATIONS IN JAPAN, PART I - COMMUNICATIONS,US,SCRIPTA TECHNICA. NEW YORK, vol. 73, no. 5, PART 01, page 22-33 XP000159282 ISSN: 8756-6621 * page 22, column 1, line 39 - line 44 * * page 23, column 3, line 19 - line 30 * --- | 1-5 | |
| A | EP 0 715 245 A (XEROX CORP) 5 June 1996 (1996-06-05) * abstract * ----- | 1-5 | |
| | | | **TECHNICAL FIELDS SEARCHED** (Int.Cl.7) |

The present search report has been drawn up for all claims

| Place of search | Date of completion of the search | Examiner |
|---|---|---|
| THE HAGUE | 24 November 2003 | Stoffers, C |

EPO FORM 1503 03.82 (P04C01)

## ANNEX TO THE EUROPEAN SEARCH REPORT
## ON EUROPEAN PATENT APPLICATION NO.

EP 03 02 1964

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2003

| Patent document cited in search report | | Publication date | Patent family member(s) | | Publication date |
|---|---|---|---|---|---|
| US 5293422 | A | 08-03-1994 | NONE | | |
| WO 9636163 | A | 14-11-1996 | US | 5832119 A | 03-11-1998 |
| | | | US | 5748783 A | 05-05-1998 |
| | | | US | 5841978 A | 24-11-1998 |
| | | | AT | 245328 T | 15-08-2003 |
| | | | AT | 230539 T | 15-01-2003 |
| | | | AT | 216546 T | 15-05-2002 |
| | | | AU | 6022396 A | 29-11-1996 |
| | | | CA | 2218957 A1 | 14-11-1996 |
| | | | DE | 69620751 D1 | 23-05-2002 |
| | | | DE | 69620751 T2 | 31-10-2002 |
| | | | DE | 69625626 D1 | 06-02-2003 |
| | | | DE | 69625626 T2 | 16-10-2003 |
| | | | DE | 69629134 D1 | 21-08-2003 |
| | | | EP | 1003324 A2 | 24-05-2000 |
| | | | EP | 1049320 A1 | 02-11-2000 |
| | | | EP | 1137251 A2 | 26-09-2001 |
| | | | EP | 0824821 A2 | 25-02-1998 |
| | | | HK | 1030122 A1 | 09-05-2003 |
| | | | JP | 2002504272 T | 05-02-2002 |
| | | | WO | 9636163 A2 | 14-11-1996 |
| | | | US | 2002164049 A1 | 07-11-2002 |
| | | | US | 6111954 A | 29-08-2000 |
| | | | US | 2003091189 A1 | 15-05-2003 |
| | | | US | 2003053653 A1 | 20-03-2003 |
| | | | US | 2003102660 A1 | 05-06-2003 |
| | | | US | 2003086585 A1 | 08-05-2003 |
| | | | US | 2003142847 A1 | 31-07-2003 |
| | | | US | 2003128861 A1 | 10-07-2003 |
| | | | US | 6567533 B1 | 20-05-2003 |
| | | | US | 6438231 B1 | 20-08-2002 |
| | | | US | 5862260 A | 19-01-1999 |
| | | | US | 6647128 B1 | 11-11-2003 |
| | | | US | 2001055407 A1 | 27-12-2001 |
| | | | US | 2001010730 A1 | 02-08-2001 |
| | | | US | 2001016051 A1 | 23-08-2001 |
| | | | US | 2002067844 A1 | 06-06-2002 |
| | | | US | 2002118831 A1 | 29-08-2002 |
| | | | US | 2002090112 A1 | 11-07-2002 |
| | | | US | 2003002710 A1 | 02-01-2003 |
| | | | US | 5841886 A | 24-11-1998 |
| | | | US | 2002090114 A1 | 11-07-2002 |
| | | | US | 2002136430 A1 | 26-09-2002 |
| | | | US | 2002170966 A1 | 21-11-2002 |
| | | | US | 2002188841 A1 | 12-12-2002 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 03 02 1964

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2003

| Patent document cited in search report | | Publication date | Patent family member(s) | | Publication date |
|---|---|---|---|---|---|
| WO 9636163 | A | | US | 6324573 B1 | 27-11-2001 |
| | | | US | 2003012403 A1 | 16-01-2003 |
| | | | US | 2003021441 A1 | 30-01-2003 |
| | | | US | 2003031341 A1 | 13-02-2003 |
| | | | US | 2003103645 A1 | 05-06-2003 |
| | | | US | 2003138127 A1 | 24-07-2003 |
| EP 0651554 | A | 03-05-1995 | EP | 0651554 A1 | 03-05-1995 |
| | | | JP | 7212712 A | 11-08-1995 |
| EP 0715245 | A | 05-06-1996 | US | 5629980 A | 13-05-1997 |
| | | | DE | 69531927 D1 | 20-11-2003 |
| | | | EP | 1293871 A2 | 19-03-2003 |
| | | | EP | 1293872 A2 | 19-03-2003 |
| | | | EP | 1293873 A2 | 19-03-2003 |
| | | | EP | 1329795 A1 | 23-07-2003 |
| | | | EP | 1329796 A1 | 23-07-2003 |
| | | | EP | 1331542 A1 | 30-07-2003 |
| | | | EP | 1338941 A1 | 27-08-2003 |
| | | | EP | 1338942 A1 | 27-08-2003 |
| | | | EP | 0715245 A1 | 05-06-1996 |
| | | | JP | 8263441 A | 11-10-1996 |

EPO FORM P0459

For more details about this annex : see Official Journal of the European Patent Office, No. 12/82